# EUROPEAN PATENT APPLICATION

(11) **EP 3 628 876 A1**
(43) Date of publication of application: **01.04.2020**
(21) Application number: 19199608.1
(22) Date of filing: 25.09.2019
(51) Int. Cl.: F16B 11/00, B29C 65/48, B62D 27/02, C09J 5/06

(54) **JOINING APPARATUS AND JOINING METHOD**

(30) Priority: 28.09.2018 JP 2018183988
(71) Applicant: Mazda Motor Corporation, Aki-gun, Hiroshima 730-8670 (JP)
(72) Inventor: YAMAGUCHI, Kojiro, Hiroshima 730-8670 (JP); TAKAHASHI, Katsunori, Hiroshima 730-8670 (JP); MORIWAKI, Motonori, Hiroshima 730-8670 (JP); NAKAI, Masanori, Hiroshima 730-8670 (JP); ICHIHARA, Koichiro, Hiroshima 730-8670 (JP); TOMINAGA, Yasuhiro, Hiroshima 730-8670 (JP); UJIHIRA, Naoki, Hiroshima 730-8670 (JP)
(74) Representative: Behr, Wolfgang

(57) **Abstract**

A joining apparatus (100) is an apparatus for performing joining of a joining target object (500) including multiple members (501, 502) stacked on each other and a thermosetting adhesive (503) arranged on joining target portions (505) of the multiple members (501, 502). The joining apparatus includes a first electrode (101) arranged to be contactable a surface of the joining target object (500) on one side in a stacking direction of the multiple members (501, 502); a second electrode (102) arranged to be contactable the surface of the joining target object (500) on one side or the other side in the stacking direction of the multiple members (501, 502); a pressurization mechanism configured to cause the first and second electrodes (101, 102) to pressure-contact the surface of the joining target object (500) in a vicinity of the joining target portions (505); a power source (50) configured to distribute power to between the first electrode (101) and the second electrode (102); and a control unit (60) configured to distribute the power to between both electrodes (101, 102) by the power source in a state in which the first electrode (101) and the second electrode (102) pressure-contact the surface by the pressurization mechanism, thereby performing joining of the joining target object (500) by curing of the thermosetting adhesive (503) by resistance heating generated at the joining target object (500).

## Description

### BACKGROUND

The present disclosure relates to a joining apparatus and a joining method.

Typically, at, e.g., an automobile body manufacturing step, in a case where members stacked on each other are joined to each other by means of a thermosetting adhesive, the adhesive is also cured upon heating and drying of a work by a coating drying furnace at a coating drying step.

However, only by curing using the coating drying furnace, an adhesive coating state is changed due to, e.g., work deformation upon delivery between steps, leading to a problem that it is difficult to ensure joining quality.

For solving the above-described problem, the method for heating and curing an adhesive by high-frequency induction heating and the method for heating and curing an adhesive by generation of induction current by a magnetic field have been proposed, for example (see, e.g., Japanese Patent Publication No. 2010-006908 and Japanese Patent Publication No. 2008-115285).

### SUMMARY

However, the method of Japanese Patent Publication No. 2010-006908 leads to a problem such as the necessity of producing a dedicated coil according to a work shape. Moreover, the method of Japanese Patent Publication No. 2008-115285 leads to problems such as the necessity of using an expensive magnet and a difficulty in precise control due to a change in an eddy current occurrence state due to a work shape. As described above, for the techniques of the above-described documents, there is room for improvement in versatility, productivity, cost performance, etc.

The present disclosure is intended to provide a joining apparatus and a joining method exhibiting excellent versatility, productivity, and cost performance and providing sufficient joining quality required for a work.

For solving the above-described problems, a member joining apparatus according to a first technique of the present disclosure is an apparatus for performing joining of a joining target object including multiple members stacked on each other and a thermosetting adhesive arranged on joining target portions of the multiple members. The apparatus includes a first electrode arranged to be contactable a surface of the joining target object on one side in a stacking direction of the multiple members; a second electrode arranged to be contactable the surface of the joining target object on one side or the other side in the stacking direction of the multiple members; a pressurization mechanism configured to cause the first and second electrodes to pressure-contact the surface of the joining target object in the vicinity of the joining target portions; a power source configured to distribute power to between the first electrode and the second electrode; and a control unit configured to distribute the power to between both electrodes by the power source in a state in which the first electrode and the second electrode pressure-contact the surface by the pressurization mechanism, thereby performing joining of the joining target object by curing of the thermosetting adhesive by resistance heating generated at the joining target object.

According to the present technique, resistance heating is generated at the joining target object by power distribution to between the first electrode and the second electrode. Then, the thermosetting adhesive can be cured by such resistance heating. Thus, curing of the thermosetting adhesive at the joining target portions requiring high rigidity can be specifically reliably performed, and sufficient joining quality required for the joining target object can be ensured. Moreover, curing of the thermosetting adhesive can be performed with a simple configuration, and therefore, the joining apparatus exhibiting excellent versatility, productivity, and cost performance can be provided.

A second technique is the first technique in which the first electrode and the second electrode are both arranged on one side in the stacking direction of the multiple members and a support member arranged facing the first electrode and the second electrode is provided on the other side in the stacking direction of the multiple members.

In the present technique, the power is distributed to between the first electrode and the second electrode arranged on one side in the stacking direction of the multiple members. Accordingly, even in a case where, e.g., a thick member is present on the other side in the stacking direction of the multiple members and no electrode can be arranged, the thermosetting adhesive can be cured by resistance heating generated at the member pressure-contacting both electrodes, and joining of the joining target object can be performed.

A third technique is the first or second technique in which each joining target portion is arranged to extend in a direction perpendicular to the stacking direction of the multiple members and both electrodes and/or the joining target object are continuously movable such that the positions of the first electrode and the second electrode are, relative to the position of the joining target object, changed in the direction of extension of each joining target portion.

According to the present technique, in a case where it is necessary to continuously join the joining target object in the direction perpendicular to the stacking direction of the multiple members, both electrodes and/or the joining target object are moved so that the relative positions of both electrodes and the multiple members can be continuously changed in the direction of extension of each joining target portion. Thus, continuous joining of the joining target object can be performed.

A fourth technique is any one of the first to third techniques in which each of the first electrode and the second electrode includes a substantially circular columnar gun body and an electrode portion arranged at a tip end of the gun body and the electrode portion pressure-contacts the surface of the joining target object to distribute the power to between both electrodes.

According to the present technique, the electrode portion provided at each of the first electrode and the second electrode pressure-contacts the surface of the joining target object, and therefore, when the power is distributed to between both electrodes, expansion of a current path can be suppressed. Thus, even in a case where the area of the joining target portion is limited, joining of the joining target object can be effectively performed.

A fifth technique is the third technique in which the first electrode and the second electrode are roller electrodes, and the roller electrodes are rotated with the roller electrodes pressure-contacting the surface of the joining target object, thereby continuously performing joining of the joining target object.

According to the present technique, in a case where the joining target portion is across a large area or a case where the member is an elongated member and the joining target portion is arranged to extend in a longitudinal direction of the elongated member, joining of the joining target object can be promptly performed with a simple configuration.

A joining method according to a sixth technique is the method for performing joining of a joining target object including multiple members stacked on each other and a thermosetting adhesive arranged on joining target portions of the multiple members. In the method, a first electrode arranged to be contactable a surface of the joining target object is provided on one side in a stacking direction of the multiple members; a second electrode arranged to be contactable the surface of the joining target object is provided on one side in the stacking direction of the multiple members; and power is distributed to between both electrodes in a state in which the first electrode and the second electrode pressure-contact the surface of the joining target object in the vicinity of the joining target portions to cure the thermosetting adhesive by resistance heating generated at the joining target object, thereby performing joining of the joining target object.

According to the present technique, resistance heating is generated at the member by power distribution to between the first electrode and the second electrode. Then, the thermosetting adhesive can be cured by such resistance heating. Thus, curing of the thermosetting adhesive at the joining target portions requiring high rigidity can be specifically reliably performed, and sufficient joining quality required for the joining target object can be ensured. Moreover, curing of the thermosetting adhesive can be performed with a simple configuration, and therefore, the joining method exhibiting excellent versatility, productivity, and cost performance can be provided.

A joining method according to a seventh technique is the method for performing joining of a joining target object including multiple members stacked on each other and a thermosetting adhesive arranged on joining target portions of the multiple members. In the method, a first electrode arranged to be contactable a surface of the joining target object is provided on one side in a stacking direction of the multiple members; a second electrode arranged to be contactable the surface of the joining target object is provided on the other side in the stacking direction of the multiple members; and power is distributed to between both electrodes in a state in which the first electrode and the second electrode pressure-contact the surface of the joining target object in the vicinity of the joining target portions to cure the thermosetting adhesive by resistance heating generated at the joining target object, thereby performing joining of the joining target object.

According to the present technique, resistance heating is generated at the member by power distribution to between the first electrode and the second electrode. Then, the thermosetting adhesive can be cured by such resistance heating. Thus, curing of the thermosetting adhesive at the joining target portions requiring high rigidity can be specifically reliably performed, and sufficient joining quality required for the joining target object can be ensured. Moreover, curing of the thermosetting adhesive can be performed with a simple configuration, and therefore, the joining method exhibiting excellent versatility, productivity, and cost performance can be provided.

An eighth technique is the sixth technique in which the multiple members include a metal member arranged at an outermost layer, the first electrode and the second electrode are both arranged to be contactable a surface of the metal member, and the power is distributed to between both electrodes in a state in which the first electrode and the second electrode pressure-contact the surface of the metal member in the vicinity of the joining target portions to cure the thermosetting adhesive by resistance heating generated at the metal member, thereby performing joining of the joining target object.

According to the present technique, joining is performed by resistance heating generated at the metal member by power distribution to between the first electrode and the second electrode. Thus, even in a case where the multiple members include a resin member, joining of the joining target object can be performed.

A ninth technique is any one of the sixth to eighth techniques in which each joining target portion is arranged to extend in a direction perpendicular to the stacking direction of the multiple members and both electrodes and/or the joining target object are continuously moved such that the positions of the first electrode and the second electrode are, relative to the position of the joining target object, changed in the direction of extension of each joining target portion, thereby continuously performing joining of the joining target object.

According to the present technique, in a case where it is necessary to continuously join the joining target object in the direction perpendicular to the stacking direction of the multiple members, both electrodes and/or the joining target object are moved so that the relative positions of both electrodes and the joining target object can be continuously changed in the direction of extension of the joining target portion. Thus, continuous joining of the joining target object can be performed.

A tenth technique is any one of the sixth to ninth techniques in which each of the first electrode and the second electrode includes a substantially circular columnar gun body and an electrode portion arranged at a tip end of the gun body and the electrode portion pressure-contacts the surface of the joining target object to distribute the power to between both electrodes.

According to the present technique, the electrode portion provided at each of the first electrode and the second electrode pressure-contacts the surface of the joining target object, and therefore, when the power is distributed to between both electrodes, expansion of a current path can be suppressed. Thus, even in a case where the area of the joining target portion is limited, joining of the multiple members can be effectively performed.

An eleventh technique is the ninth technique in which the first electrode and the second electrode are roller electrodes and the roller electrodes are rotated with the roller electrodes pressure-contacting the surface of the joining target object, thereby continuously performing joining of the joining target object.

According to the present technique, in a case where the joining target portion is across a large area or a case where the member is an elongated member and the joining target portion is arranged to extend in a longitudinal direction of the elongated member, joining of the joining target object can be promptly performed with a simple configuration.

As described above, according to the present disclosure, resistance heating is generated at the joining target object by power distribution to between the first electrode and the second electrode. Then, the thermosetting adhesive can be cured by such resistance heating. Thus, curing of the thermosetting adhesive at the joining target portions requiring high rigidity can be specifically reliably performed, and sufficient joining quality required for the joining target object can be ensured. Moreover, curing of the thermosetting adhesive can be performed with a simple configuration, and therefore, the joining apparatus exhibiting excellent versatility, productivity, and cost performance can be provided.

### BRIEF DESCRIPTION OF THE DRAWINGS

FIG. 1 is a schematic view of a functional configuration of a joining apparatus according to a first embodiment of the present disclosure.
FIG. 2 is a schematic perspective view of the state of joining of a work by means of the joining apparatus of FIG. 1.
FIG. 3 is a flowchart of a work joining process.
FIG. 4 is a schematic sectional view of a joining apparatus for describing a joining method according to a second embodiment.
FIG. 5 is a schematic sectional view of a joining apparatus for describing a joining method according to a third embodiment.
FIG. 6 is a schematic sectional view of the configuration of a joining apparatus according to a fourth embodiment.
FIG. 7 is a schematic sectional view of the configuration of a joining apparatus according to a fifth embodiment.
FIG. 8 is a schematic sectional view of the configuration of a joining apparatus according to a sixth embodiment.
FIG. 9 is a schematic sectional view of the configuration of a joining apparatus according to a seventh embodiment.
FIG. 10 is a schematic perspective view of the state of joining of a work by means of the joining apparatus of FIG. 9.

### DETAILED DESCRIPTION

Hereinafter, embodiments of the present disclosure will be described in detail with reference to the drawings. Description of the preferred embodiments below will be set forth merely as examples in nature, and is not intended to limit the present disclosure and application and use thereof.

### (First Embodiment)

### <Member Joining Apparatus>

### Outline of Apparatus

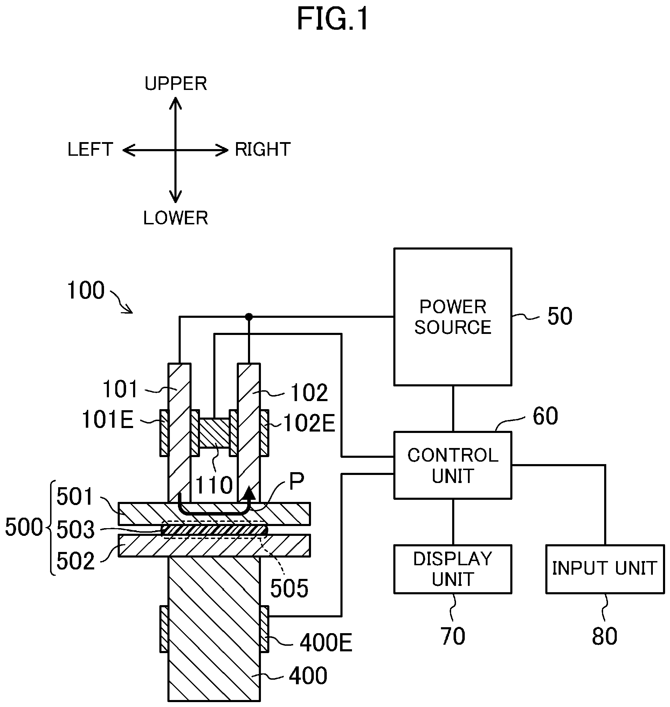

FIG. 1 is a schematic view of a functional configuration of a joining apparatus 100. As illustrated in FIG. 1, the joining apparatus 100 includes a first electrode 101, a second electrode 102, a support member 400, a power source 50, a control unit 60, a display unit 70, and an input unit 80.

The joining apparatus 100 according to the present embodiment is a device configured to join a work 500 (a joining target object) including two members 501 (multiple members) stacked on each other and a thermosetting adhesive 503 arranged on joining target portions 505 of the members 501, 502. The work 500 is sandwiched between each of the first electrode 101 and the second electrode 102 and the support member 400.

Note that for the sake of convenience in description, a mechanical structure other than the section of a main portion including the first electrode 101, the second electrode 102, the support member 400, and the work 500 (the joining target object) is not shown in FIG. 1. Moreover, the joining apparatus 100 includes many components other than those illustrated in FIG. 1, such as a device base on which the first electrode 101 and the second electrode 102 are supported, a drive mechanism for the first electrode 101 and the second electrode 102, pressurization mechanisms for the first electrode 101, the second electrode 102, and the support member 400, and an air tube configured to drive the pressurization mechanism. However, these components are not shown in the figure, and detailed description thereof will be omitted.

### Directions

In the present specification, directions at the main portion will be sometimes referred as follows for descriptive purposes. That is, as illustrated in FIG. 1, a direction in which the first electrode 101 and the second electrode 102 are arranged with respect to the work 500 will be sometimes referred to as an "upper direction," and a direction in which the support member 400 is arranged will be sometimes referred to as a "lower direction." In this case, an "upper-lower direction" corresponds to a "stacking direction" of the members 501, 502 of the work 500. Moreover, as illustrated in FIG. 1, a direction which is parallel to the plane of paper of FIG. 1 and perpendicular to the "upper-lower direction" and which is on a first electrode 101 side will be sometimes referred to as a "left direction," and a direction on a second electrode 102 side will be sometimes referred to as a "right direction." In addition, a direction perpendicular to the "upper-lower direction" and a "right-left direction" will be sometimes referred to as a "front-back direction." A near side on the plane of paper of FIG. 1 will be sometimes referred to as a "front direction," and a far side will be sometimes referred to as a "back direction." Note that the above-described directions do not limit arrangement of other configurations than the main portion, i.e., arrangement of the power source 50, the control unit 60, the display unit 70, the input unit 80, and not-shown other configurations.

### First Electrode and Second Electrode

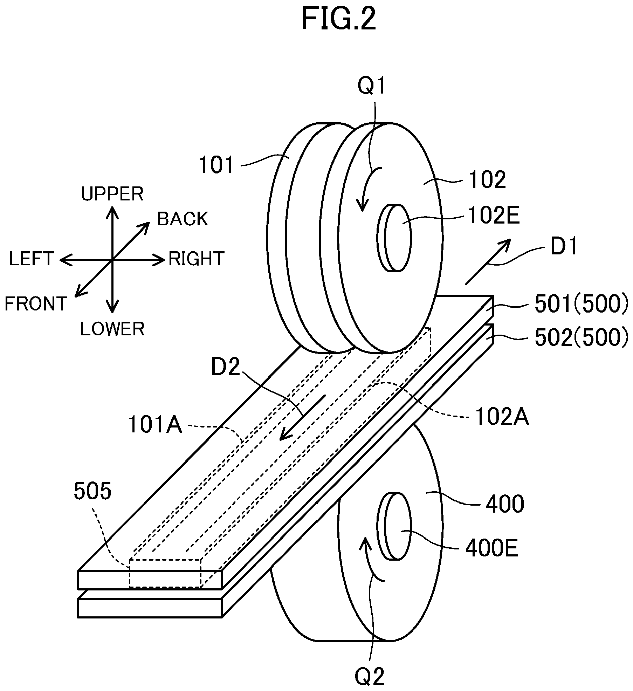

As illustrated in FIGS. 1 and 2, the first electrode 101 is a discoid roller electrode arranged on an upper side (on one side in the stacking direction of the multiple members) of the work 500 and supported by a rotary shaft 101E to be rotatable about the rotary shaft 101E. The first electrode 101 is arranged to be contactable a surface (a surface on one side in the stacking direction of the members) of the upper member 501 of the work 500.

As in the first electrode 101, the second electrode 102 is a discoid roller electrode arranged on the upper side (on one side in the stacking direction of the multiple members) of the work 500 and supported by a rotary shaft 102E to be rotatable about the rotary shaft 102E. The second electrode 102 is arranged to be contactable the surface (the surface on one side in the stacking direction of the members) of the upper member 501 of the work 500. The first electrode 101 and the second electrode 102 have the same diameter in the upper-lower direction and the same width in the right-left direction, and are arranged apart from each other in the right-left direction. The diameters of the first electrode 101 and the second electrode 102 in the upper-lower direction, the widths of the first electrode 101 and the second electrode 102 in the right-left direction, a distance between the first electrode 101 and the second electrode 102 in the right-left direction, etc. can be set as necessary according to the area of the joining target portion 505 or the configuration of the work 500. The center axis of the rotary shaft 101E and the center axis of the rotary shaft 102E are configured coaxially, and both rotary shafts 101E, 102E are physically connected to each other at a connection portion 110. Note that the first electrode 101 and the second electrode 102 are insulated from each other, and are not electrically connected to each other at the connection portion 110.

A drive section (not shown) configured to rotate both rotary shafts 101E, 102E in a direction indicated by an arrow Q1 in FIG. 2 is additionally provided at the connection portion 110 connecting the rotary shafts 101E, 102E. The drive section provided at the connection portion 110 is electrically connected to the control unit 60, and is configured to rotate, according to a command from the control unit 60, the first electrode 101 and the second electrode 102 at a preset predetermined rotation speed.

### Support Member

The support member 400 is a discoid roller member arranged facing the first electrode 101 and the second electrode 102 on a lower side (the other side in the stacking direction of the multiple members) of the work 500 and supported by a rotary shaft 400E to be rotatable about the rotary shaft 400E. The support member 400 and the first and second electrodes 101, 102 together sandwich the work 500, thereby supporting the work 500.

The rotary shaft 400E of the support member 400 is configured to rotate in a direction indicated by an arrow Q2 in FIG. 2 in association with rotation of the rotary shafts 101E, 102E. Moreover, in association with rotation of the first electrode 101, the second electrode 102, and the support member 400, the work 500 moves in a direction indicated by a reference numeral D1.

Although not specifically limited, the diameter of the support member 400 in the upper-lower direction can be substantially equal to or slightly smaller than those of the first electrode 101 and the second electrode 102. With this configuration, delivery of the work 500 can be smoothly performed. The width of the support member 400 in the right-left direction is preferably a width of substantially equal to or greater than a width from a left end of the first electrode 101 to a right end of the second electrode 102, considering ensuring of sufficient contact of the first electrode 101 and the second electrode 102 with the work 500.

Note that rotation directions of the first electrode 101, the second electrode 102, and the support member 400 may be reversed to deliver the work 500 forward. Alternatively, instead of the work 500, the first electrode 101, the second electrode 102, and the support member 400 may be moved forward or backward with respect to the work 500.

### Pressurization Mechanism

The pressurization mechanisms (not shown) are additionally provided at the connection portion 110 between the first electrode 101 and the second electrode 102 and the rotary shaft 400E of the support member 400. The pressurization mechanisms are for moving the first electrode 101, the second electrode 102, and the support member 400 in the upper-lower direction to pressurize each of the electrodes 101, 102 and the support member 400 with these components contacting the work 500. In the present embodiment, the pressurization mechanism includes an air cylinder, a compression pump, etc., but is not specifically limited to above. For example, a hydraulic cylinder, a servomotor, etc. may be used.

Specifically, the pressurization mechanism provided at the connection portion 110 is configured to pressurize the first electrode 101 and the second electrode 102 in the lower direction, and the pressurization mechanism provided at the rotary shaft 400E is configured to pressurize the support member 400 in the upper direction. Each pressurization mechanism provided at the connection portion 110 and the rotary shaft 400E is electrically connected to the control unit 60. Note that the pressurization mechanism provided at the connection portion 110 and the pressurization mechanism provided at the rotary shaft 400E are configured to independently pressurize the work 500. Moreover, pressurization force of each pressurization mechanism is set to a predetermined value in advance. The pressurization mechanisms may have the same pressurization force or different pressurization forces. Moreover, in a case where sufficient contact between each of the first electrode 101 and the second electrode 102 and the work 500 is ensured, it may be configured such that only the first electrode 101 and the second electrode 102 are pressurized and the support member 400 is not pressurized, and vice versa.

### Other Configurations

The power source 50 is a DC power source or an AC power source, and is electrically connected to each of the first electrode 101 and the second electrode 102. The power source 50 is configured to supply, according to a control signal corresponding to predetermined joining conditions from the control unit 60, a predetermined amount of current to between the first electrode 101 and the second electrode 102 for a predetermined period of time.

The control unit 60 is electrically connected to the drive section and the pressurization mechanism for the first electrode 101 and the second electrode 102, the pressurization mechanism for the support member 400, and the power source 50, and is configured to send the control signal to these configurations according to the predetermined joining conditions. Moreover, the control unit 60 is also electrically connected to the display unit 70 and the input unit 80. The control unit 60 normally includes, for example, an interface for a central processing unit (CPU) and external equipment.

The control unit 60 may store a joining program set in advance according to, e.g., the structure or material of the work 500. Note that such a joining program may be stored in a not-shown storage unit provided separately from the control unit 60. In this case, the control unit 60 reads the joining program from the storage unit, and sends the control signal to each unit of the joining apparatus 100 to execute predetermined joining. For this joining program, the joining conditions according to, e.g., the structure or material of the work 500, such as a current value, power distribution time, pressurization force, and pressurization time, are set. Note that the storage unit may be incorporated into the control unit 60.

The display unit 70 is connected to the control unit 60, and for example, is configured to display the contents of the joining program to be executed or display various types of information during joining, such as a time change in an applied current value. Note that the display unit 70 may display other types of data than above. The display unit 70 normally includes a display device such as a cathode-ray tube or a liquid crystal display.

The input unit 80 is, for example, configured to directly input, e.g., the contents of correction of the joining program to the control unit 60. Moreover, the input unit 80 is configured to input, from the control unit 60 etc., a command for invoking the joining program to be executed. The input unit 80 may include a keyboard, a touch panel, etc. In the case of using the touch panel, the display unit 70 and the input unit 80 may be shared.

### «Work»

The work 500 targeted for welding is sandwiched between each of the first electrode 101 and the second electrode 102 and the support member 400 (a support member). The work 500 is configured such that the member 501 arranged on the upper side and the member 502 arranged on the lower side are stacked on each other through the thermosetting adhesive 503 arranged on the joining target portions 505.

The members 501, 502 are, for example, members made of metal such as aluminum, copper, iron, or alloy thereof or members made of a carbon-fiber reinforced composite metal material. Specifically, these members are, for example, automobile components such as a front panel, a floor panel, a rear panel, a side sill, a tunnel reinforcement, a cross member, a frame, and an outer panel, components of other vehicles such as an airplane and a train, and jointable members such as a building material and an industrial product.

As illustrated in FIG. 2, the joining target portions 505 on which the thermosetting adhesive 503 is arranged are arranged to extend in the front-back direction.

As described above, the work 500 is delivered in the direction indicated by the reference numeral D1 in FIG. 2 in association with rotation of the first electrode 101, the second electrode 102, and the support member 400. Accordingly, the positions of the first electrode 101 and the second electrode 102 are, relative to the position of the work 500, moved in the direction of extension of the joining target portion 505, i.e., a direction indicated by a reference numeral D2 in FIG. 2. In this manner, joining of the joining target portions 505 of the work 500 can be continuously performed.

Note that if heating of the periphery of the joining target portions 505 is allowed, the work 500 may have a member stacked on the members 501, 502 in addition to these members.

### «Thermosetting Adhesive»

Examples of the thermosetting adhesive 503 may include a one-component heat curing adhesive containing epoxy resin or acrylic resin as a main component and a UD tape as a fiber reinforced composite material. Note that the UD tape is bonded to the surfaces of the member 501 and the member 502 and is interposed between both members 501, 502, and therefore, plate rigidity of both members 501, 502 can be improved. Although not specifically limited, curing conditions of the thermosetting adhesive 503 are determined as necessary according to the type of thermosetting adhesive 503, and may specifically include 140 to 160°C × 20 minutes and 80°C × 60 minutes (a low-temperature curing type), for example.

### <Member Joining Method>

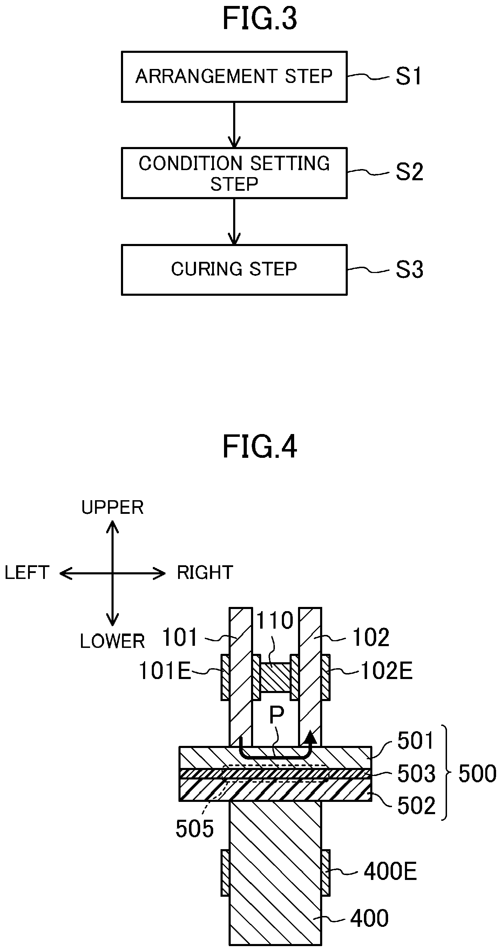

The method for joining the power source 50 by means of the joining apparatus 100 includes, as illustrated in FIG. 3, an arrangement step S1, a condition setting step S2, and a curing step S3.

### «Arrangement Step»

At the arrangement step S1, the thermosetting adhesive 503 is first arranged on adhesive arrangement portions corresponding to the joining target portions 505 of the members 501, 502, and the work 500 is prepared with the members 501, 502 being stacked on each other.

Then, the work 500 is arranged between each of the first electrode 101 and the second electrode 102 and the support member 400 in the joining apparatus 100.

### «Condition Setting Step»

At the condition setting step S2, the joining conditions for the work 500 are set. Specifically, power distribution conditions regarding the amount of current to be applied to between the first electrode 101 and the second electrode 102 and the power distribution time are, considering the materials of the members 501, 502, set such that a temperature increase according to the curing conditions of the thermosetting adhesive 503 is allowed, for example. The current amount may be constant or changeable over time. Moreover, for sufficiently curing the thermosetting adhesive 503 and sufficiently joining the members 501, 502 at the joining target portions 505 to obtain high rigidity, pressurization conditions regarding, e.g., the pressurization force for the first electrode 101, the second electrode 102, and the support member 400 and the pressurization time are set. The pressurization force may be constant or changeable over time. Further, e.g., delivery conditions regarding the rotation speeds of both electrodes 101, 102, i.e., the delivery speed of the work 500, are also set. The speed may be constant or changeable over time. In a case where the joining target portion 505 is not continuously provided, but is scattered at predetermined intervals, it can be configured such that power is distributed to both electrodes 101, 102 in a pulsed manner to perform joining at desired joining target portions 505.

Note that in a case where aluminum alloy plate members having a thickness of about 5 mm are used as the members 501, 502 and a one-component heat curing adhesive containing epoxy resin as a main component and having a curing condition of 140 to 160°C × 20 minutes is used as the thermosetting adhesive 503, the power distribution conditions, the pressurization conditions, the delivery conditions, etc. are set so that a temperature around the joining target portion 505 of the member 501 can reach 140 to 160°C by resistance heating and can be held for about 20 minutes.

### «Curing Step»

At the curing step S3, joining of the work 500 according to the joining conditions set at the condition setting step S2 is performed. Specifically, the first electrode 101, the second electrode 102, and the support member 400 are, under the preset pressurization conditions, in pressure contact with a surface of the work 500 in the vicinity of the joining target portions 505, for example. In this state, power is distributed to between the first electrode 101 and the second electrode 102 according to the preset power distribution conditions. Accordingly, as illustrated in FIG. 1, current flows between the first electrode 101 and the second electrode 102 as indicated by a reference character P, for example. Accordingly, heat is generated around a current path P due to resistance of the member 501. Then, pressurization and power distribution are performed for predetermined pressurization time and predetermined power distribution time, and the thermosetting adhesive 503 is sufficiently cured by resistance heating generated around the current path P of the member 501. In this manner, joining of the work 500 is performed.

Note that when curing of the thermosetting adhesive 503 at a predetermined spot has been performed and joining of the work 500 has been performed, the first electrode 101 and the second electrode 102 are rotated by the drive section while the pressurization force for the first electrode 101, the second electrode 102, and the support member 400 is being held. In this manner, the work 500 is slightly delivered in the D1 direction. Then, the positions of the first electrode 101 and the second electrode 102 are, relative to the position of the work 500, moved forward as indicated by reference numerals 101A, 102A of FIG. 2. Thereafter, the first electrode 101 and the second electrode 102 are stopped, and power is distributed to between both electrodes. Then, joining of a front spot adjacent to the spot for which joining has been performed previously is performed. In this manner, stop and rotation of the first electrode 101 and the second electrode 102 and power distribution to between both electrodes are repeated, and as illustrated in FIG. 2, continuous joining of the joining target portions 505 extending in the front-back direction is performed. Note that according to the materials of the members 501, 502 and the physical properties of the thermosetting adhesive 503, the work 500 may be constantly delivered in the D1 direction by continuous rotation of the first electrode 101 and the second electrode 102 without stop.

Moreover, in FIG. 1, the current path P is illustrated such that current flows from the first electrode 101 side to the second electrode 102 side. In a case where the power source 50 is the DC power source, it may be configured such that current flows in an opposite direction, or it may be configured such that the AC power source is used as the power source 50 and a current flow direction is changed regularly. Note that considering uniformity in heating of the member 501 and reduction in local overheating of the joining apparatus 100 and the work 500, the AC power source is preferably used as the power source 50 and the current flow direction is preferably switchable.

### <Features and Advantageous Effects>

In the joining apparatus 100 and the joining method according to the present embodiment, power is distributed to between the first electrode 101 and the second electrode 102, and the thermosetting adhesive 503 is cured by resistance heating generated at the member 501. Thus, curing of the thermosetting adhesive 503 at the joining target portions 505 specifically requiring high rigidity can be reliably performed.

Even in a case where no electrode can be arranged on the lower side of the member 502, such as a case where the member 502 is thick or a case where another member is further present on the lower side of the member 502, the first electrode 101 and the second electrode 102 are both arranged on an upper member 501 side. Thus, power is distributed to between both electrodes. In this manner, the thermosetting adhesive 503 can be cured by resistance heating generated at the member 501, and the work 500 can be joined.

Note that in a case where the member 501 and/or the 502 are the members made of the carbon-fiber reinforced composite metal material, it might be difficult to perform joining by, e.g., normal spot welding due to, e.g., deformation of the member 501 and/or the member 502 caused by carbon diffusion. According to the joining apparatus 100 and the joining method according to the present embodiment, the members 501, 502 are joined by curing of the thermosetting adhesive 503. Thus, e.g., deformation of both members 501, 502 can be reduced, and high-quality joining can be performed.

As described above, according to the joining apparatus 100 and the joining method in the present embodiment, sufficient joining quality required for the work 500, such as high rigidity, can be ensured. Moreover, curing of the thermosetting adhesive 503 can be performed with a simple configuration. Thus, the joining apparatus 100 and the joining method easily incorporated into a manufacturing line and exhibiting excellent versatility, productivity, and cost performance can be provided, for example.

Hereinafter, other embodiments of the present disclosure will be described in detail. Note that in description of such embodiments, the same reference numerals are used to represent the same elements as those of the first embodiment, and detailed description thereof will be omitted.

### (Second Embodiment)

The structure of a work 500 is not limited to that of the first embodiment.

That is, as illustrated in, e.g., FIG. 4, a member 502 may be a resin member. Specifically, examples of resin may include epoxy resin, acrylic resin, vinylester resin, phenol resin, polyimide resin, polyurethane resin, polyolefin resin, polycarbonate resin, polyamide resin, and polyester resin. Moreover, the member 502 may be, for example, a member made of fiber reinforced resin containing reinforced fibers such as carbon fibers, glass fibers, or basalt fibers in the above-described resin or a UD tape. The fiber reinforced resin member, the UD tape, etc. are lightweight and exhibit excellent strength and durability. Considering improvement of formability, strength, designability, functionality, etc., the resin member may contain one or two or more of additives such as a filler, a pigment, a dye, an impact-modified agent, an UV absorbent, etc.

In a case where the member 502 is the resin member, it might be difficult to arrange an electrode right below the member 502. In a joining apparatus 100, a first electrode 101 and a second electrode 102 are both arranged on an upper member 501 side, and therefore, both electrodes do not directly contact the lower resin member 502. Power is distributed to between both electrodes so that a thermosetting adhesive 503 can be cured by resistance heating caused at the member 501 and the work 500 can be joined.

### (Third Embodiment)

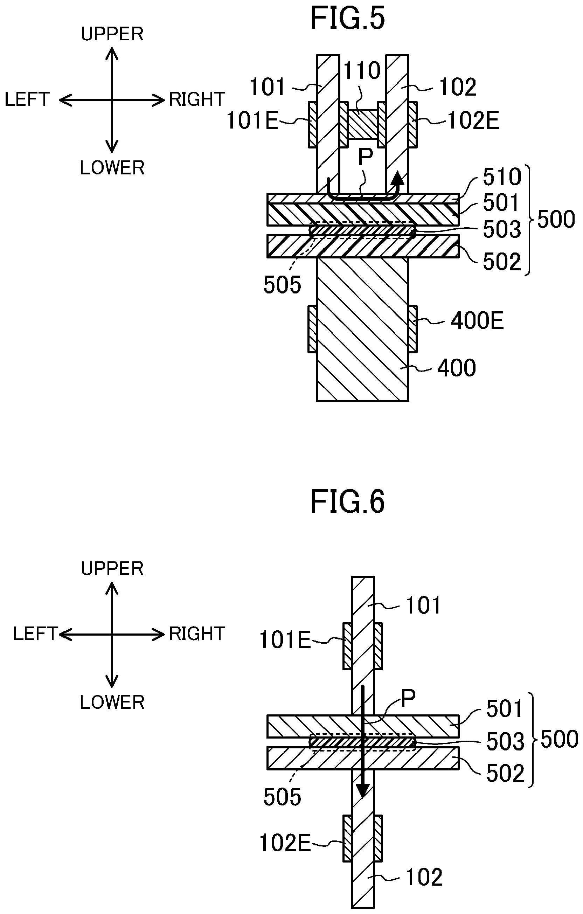

As illustrated in FIG. 5, a work 500 may be configured such that any of members 501, 502 is a resin member, and a metal member 510 may be arranged on a surface of the member 501, i.e., the upper outermost layer of the work 500. Specifically, the work 500 is, for example, configured such that as the metal member 510, metal plating is performed for the upper surface of the resin member 501 or a thin metal plate is arranged on the upper surface of the member 501. Moreover, in FIG. 5, the member 510 is arranged across the entirety of an upper side of the member 501, but is not limited to such a configuration. For example, metal plating may be performed only for a contact spot between a first electrode 101 and a second electrode 102 and a portion between both electrodes, or a thin metal plate may be arranged only at the contact spot between the first electrode 101 and the second electrode 102 and the portion between both electrodes.

In a joining apparatus 100, the first electrode 101 and the second electrode 102 are both arranged to contact the upper outermost member 510. Thus, both electrodes do not directly contact the resin members 501, 502 of even the work 500 having the above-described configuration. Power is distributed to between both electrodes so that a thermosetting adhesive 503 can be heated and cured through the member 501 by resistance heating caused at the member 510 and the work 500 can be joined.

### (Fourth Embodiment)

The joining apparatus 100 of each of the above-described first to third embodiments is configured such that the first electrode 101 and the second electrode 102 are both arranged on the upper side. However, as illustrated in FIG. 6, it may be configured such that a first electrode 101 is arranged on an upper side, a second electrode 102 is arranged on a lower side, and a work 500 is sandwiched between both electrodes. In this case, a support member 400 is not necessary. Moreover, a current path P is generated in a direction passing through the work 500. With this configuration, curing of a thermosetting adhesive 503 can be accelerated by resistance heating generated at members 501, 502 and the thermosetting adhesive 503, and joining of the work 500 can be efficiently performed faster. Note that in this configuration, current directly flows in any of the members 501, 502, and therefore, any of the members 501, 502 are preferably a metal member as in the first embodiment.

Note that FIG. 6 illustrates a configuration in which the first electrode 101 is arranged on the upper side and the second electrode 102 is arranged on the lower side, but it may be configured such that the first electrode 101 is arranged on the lower side and the second electrode 102 is arranged on the upper side.

It may be configured such that a drive section is provided any one of the first electrode 101 or the second electrode 102 to rotate one of the first electrode 101 or the second electrode 102 and rotate the other one of the first electrode 101 or the second electrode 102 in association with rotation of one of the first electrode 101 or the second electrode 102. Alternatively, it may be configured such that drive sections are provided at both of the first electrode 101 and the second electrode 102 to independently rotate both electrodes. Moreover, it may be configured such that a pressurization section is provided at any one of the first electrode 101 or the second electrode 102. Alternatively, it may be configured such that pressurization sections are provided at both of the first electrode 101 and the second electrode 102 so that both electrodes can independently pressurize the work 500.

### (Fifth Embodiment)

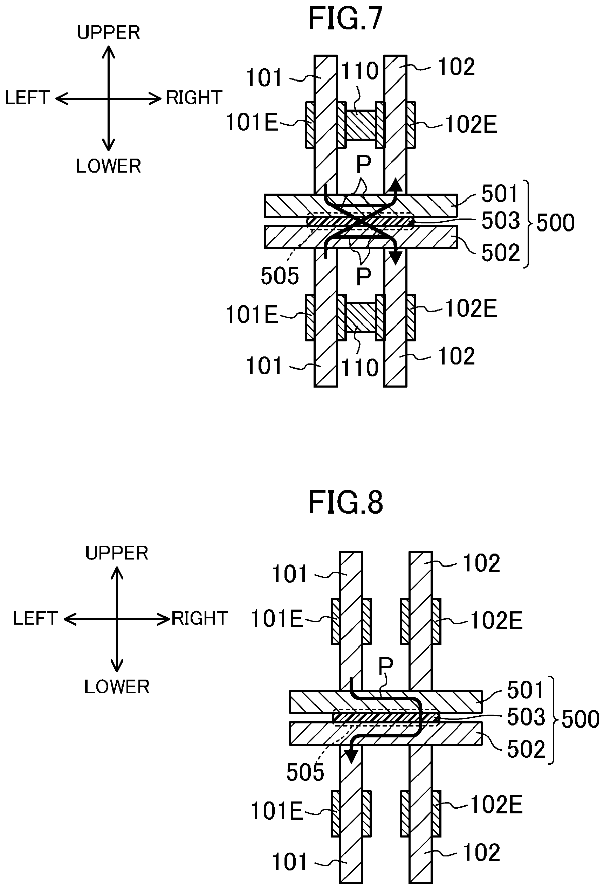

As illustrated in FIG. 7, it may be configured such that a first electrode 101 and a second electrode 102 of FIG. 1 are also arranged on a lower side instead of a support member 400. In this configuration, a power source 50 is also electrically connected to the first electrode 101 and the second electrode 102 arranged on the lower side. Moreover, a control unit 60 is also electrically connected to a connection portion 110 between the first electrode 101 and the second electrode 102 on the lower side.

With this configuration, a current path P is also formed at a member 502, and a current path P between the upper or lower first electrode 101 and the lower or upper second electrode 102 is also formed. Thus, joining of a work 500 can be more efficiently accelerated by resistance heating generated at members 501, 502 and a thermosetting adhesive 503.

Note that in this configuration, in a case where the member 502 is a resin member, the work 500 may be configured such that a metal member 510 illustrated in FIG. 5 is arranged on the lower side of the member 502.

The diameters of the first electrode 101 and the second electrode 102 in the upper-lower direction, the widths of the first electrode 101 and the second electrode 102 in the right-left direction, a distance between both electrodes in the right-left direction, etc. may be the same or different between the upper configuration and the lower configuration.

### (Eighth Embodiment)

The joining apparatus 100 (see FIGS. 1, 4, 5, and 7) according to each of the first to third and fifth embodiments is configured such that the first electrode 101 and the second electrode 102 are connected to each other at the connection portion 110, but it may be configured such that no connection portion 110 is provided. Moreover, a first electrode 101 and a second electrode 102 may be independently driven and/or pressurized. In this case, it may be configured such that a drive section and a pressurization mechanism are provided at each of the first electrode 101 and the second electrode 102.

Specifically, FIG. 8 illustrates a configuration in which no connection portion 110 is provided at the first electrode 101 and the second electrode 102 in the joining apparatus 100 (see FIG. 7) according to the fifth embodiment. In the configuration illustrated in FIG. 8, each of two pairs of the first electrode 101 and the second electrode 102 arranged on upper and lower sides of a work 500 can be independently pressurized. For example, power is distributed to between the upper and lower first electrodes 101 while pressurization force between the upper and lower second electrodes 102 is being increased as compared to that between the first electrodes 101. Thus, as illustrated in FIG. 8, a current path P reaching the lower first electrode 101 from the upper first electrode 101 through the upper and lower second electrodes 102 can be formed. Thus, the pressurization force for the first electrodes 101 and the second electrodes 102 is adjusted so that the formation position of the current path P can be adjusted. Note that in the configuration of FIG. 8, power may be distributed to between the second electrodes 102 while the pressurization force between the first electrodes 101 being adjusted, for example.

### (Seventh Embodiment)

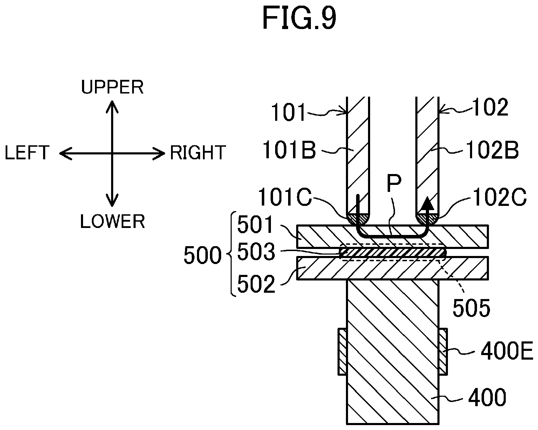

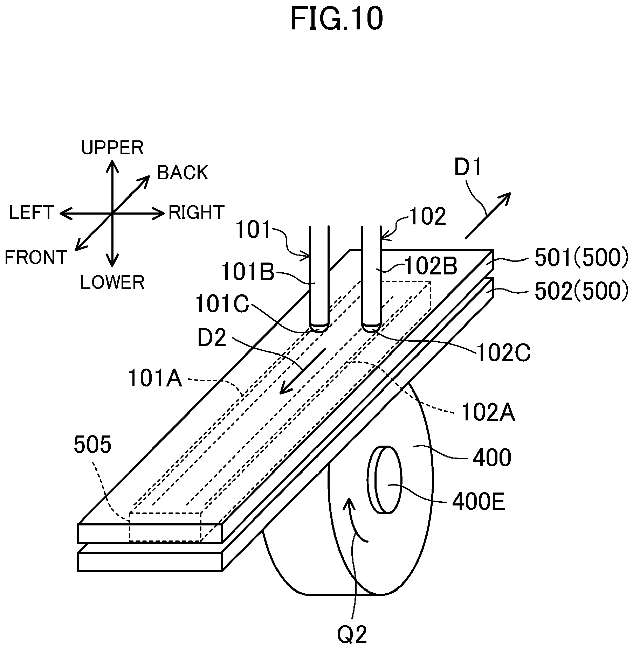

In the first to sixth embodiments, the first electrode 101 and the second electrode 102 are the roller electrodes. However, as illustrated in FIGS. 9 and 10, it may be configured such that an electrode including a substantially circular columnar gun body 101B, 102B extending in the upper-lower direction and an electrode portion 101C, 102C arranged at a tip end of the gun body 101B, 102B is employed as first and second electrodes. As illustrated in FIGS. 9 and 10, the first electrode 101 and the second electrode 102 pressure-contact a surface of a member 501 in the vicinity of a joining target portion 505 of a work 500 through the electrode portions 101C, 102C. Then, power is distributed to between both electrodes, and joining of the work 500 is performed.

According to this configuration, the electrode portions 101C, 102C each provided at the first electrode 101 and the second electrode 102 pressure-contact the surface of the work 500. Thus, when power is distributed to between both electrodes, excessive expansion of a current path P can be suppressed. Even in a case where the area of the joining target portion 505 is limited, joining of the work 500 can be effectively performed.

Note that as illustrated in FIG. 10, the work 500 may be moved in a D1 direction and/or the first electrode 101, the second electrode 102, and a support member 400 may be moved in a D2 direction to continuously join the joining target portions 505 extending in the front-back direction.

### (Other Embodiments)

In each of the joining apparatuses 100 of FIGS. 1, 4, 5, and 9, the support member 400 is a roller member, but is not limited to the roller member. The support member 400 may be a member having, e.g., a rectangular parallelepiped shape. In this case, the work 500 can be arranged on a flat surface of the support member 400. Moreover, in this configuration, the support member 400 is not necessarily rotated, and in the case of moving the support member 400, may be moved in parallel to the horizontal direction.

Moreover, after joining by the joining apparatus 100, the step of further curing the thermosetting adhesive 503 by a coating drying furnace may be provided. After temporal joining by the joining apparatus 100, final curing is performed by the coating drying furnace, and therefore, the joining quality can be more reliably obtained.

Further, the joining apparatus 100 is configured such that the members 501, 502 targeted for joining are both the metal members, and at a spot where no thermosetting adhesive 503 is present, can be also used as a resistance welding apparatus. Specifically, such a case may include, for example, a case where weldbond joining as a combination of joining by the thermosetting adhesive 503 and spot welding is performed and a case where a work targeted for joining by the thermosetting adhesive 503 and a work targeted for resistance welding are mixed on, e.g., a manufacturing line. In this case, the contact positions of the first electrode 101 and the second electrode 102, the pressurization force, the power distribution conditions, etc. are adjusted so that joining by heat curing of the thermosetting adhesive 503 can be performed at a spot where the thermosetting adhesive 503 is present and joining by spot welding can be performed at a spot where no thermosetting adhesive 503 is present. Thus, both of joining by the thermosetting adhesive 503 and joining by spot welding can be performed by the single joining apparatus 100, and a working step can be simplified.

The present disclosure can provide, in a member joining apparatus and a member joining method using a thermosetting adhesive, the joining apparatus and the joining method exhibiting excellent versatility, productivity, and cost performance and leading to sufficient joining quality required for a work. Thus, the present disclosure is extremely useful.

### DESCRIPTION OF REFERENCE CHARACTERS

- 50: Power Source
- 60: Control Unit
- 100: Joining Apparatus
- 101: First Electrode
- 101B: Gun Body
- 101C: Electrode Portion
- 102: Second Electrode
- 102B: Gun Body
- 102C: Electrode Portion
- 400: Support Member
- 500: Work (Joining Target Object)
- 501: Member (Multiple Members, Metal Member)
- 502: Member (Multiple Members, Metal Member)
- 503: Thermosetting Adhesive
- 505: Joining Target Portion
- 510: Member (Multiple Members, Metal Member)

## Claims

1. A joining apparatus (100) for performing joining of a joining target object (500) including multiple members (501, 502) stacked on each other and a thermosetting adhesive (503) arranged on joining target portions (505) of the multiple members (501, 502), comprising;
a first electrode (101) arranged to be contactable a surface of the joining target object (500) on one side in a stacking direction of the multiple members (501, 502);
a second electrode (102) arranged to be contactable the surface of the joining target object (500) on one side or the other side in the stacking direction of the multiple members (501, 502);
a pressurization mechanism configured to cause the first and second electrodes (101, 102) to pressure-contact the surface of the joining target object (500) in a vicinity of the joining target portions (505);
a power source (50) configured to distribute power to between the first electrode (101) and the second electrode (102); and
a control unit (60) configured to distribute the power to between both electrodes (101, 102) by the power source in a state in which the first electrode (101) and the second electrode (102) pressure-contact the surface by the pressurization mechanism, thereby performing joining of the joining target object (500) by curing of the thermosetting adhesive (503) by resistance heating generated at the joining target object (500).

2. The joining apparatus (100) according to claim 1, wherein
the first electrode (101) and the second electrode (102) are both arranged on one side in the stacking direction of the multiple members (501, 502), and
a support member (400) arranged facing the first electrode (101) and the second electrode (102) is provided on the other side in the stacking direction of the multiple members (501, 502).

3. The joining apparatus (100) according to claim 1 or claim 2, wherein
each joining target portion (505) is arranged to extend in a direction perpendicular to the stacking direction of the multiple members (501, 502), and
both electrodes (101, 102) and/or the joining target object (500) are continuously movable such that positions of the first electrode (101) and the second electrode (102) are, relative to a position of the joining target object (500), changed in a direction of extension of each joining target portion (505).

4. The joining apparatus (100) according to any one of claims 1 to 3, wherein
each of the first electrode (101) and the second electrode (102) includes a substantially circular columnar gun body and an electrode portion arranged at a tip end of the gun body, and
the electrode portion pressure-contacts the surface of the joining target object (500) to distribute the power to between both electrodes (101, 102).

5. The joining apparatus (100) according to claim 3, wherein
the first electrode (101) and the second electrode (102) are roller electrodes, and
the roller electrodes are rotated with the roller electrodes pressure-contacting the surface of the joining target object (500), thereby continuously performing joining of the joining target object (500).

6. A joining method for performing joining of a joining target object (500) including multiple members (501, 502) stacked on each other and a thermosetting adhesive (503) arranged on joining target portions (505) of the multiple members (501, 502), wherein
a first electrode (101) arranged to be contactable a surface of the joining target object (500) is provided on one side in a stacking direction of the multiple members (501, 502),
a second electrode (102) arranged to be contactable the surface of the joining target object (500) is provided on one side in the stacking direction of the multiple members (501, 502), and
power is distributed to between both electrodes (101, 102) in a state in which the first electrode (101) and the second electrode (102) pressure-contact the surface of the joining target object (500) in a vicinity of the joining target portions (505) to cure the thermosetting adhesive (503) by resistance heating generated at the joining target object (500), thereby performing joining of the joining target object (500).

7. A joining method for performing joining of a joining target object (500) including multiple members (501, 502) stacked on each other and a thermosetting adhesive (503) arranged on joining target portions (505) of the multiple members (501, 502), wherein
a first electrode (101) arranged to be contactable a surface of the joining target object (500) is provided on one side in a stacking direction of the multiple members (501, 502),
a second electrode (102) arranged to be contactable the surface of the joining target object (500) is provided on the other side in the stacking direction of the multiple members (501, 502), and
power is distributed to between both electrodes (101, 102) in a state in which the first electrode (101) and the second electrode (102) pressure-contact the surface of the joining target object (500) in a vicinity of the joining target portions (505) to cure the thermosetting adhesive (503) by resistance heating generated at the joining target object (500), thereby performing joining of the joining target object (500).

8. The joining method according to claim 6, wherein
the multiple members (501, 502) include a metal member arranged at an outermost layer,
the first electrode (101) and the second electrode (102) are both arranged to be contactable a surface of the metal member, and
the power is distributed to between both electrodes (101, 102) in a state in which the first electrode (101) and the second electrode (102) pressure-contact the surface of the metal member in the vicinity of the joining target portions (505) to cure the thermosetting adhesive (503) by resistance heating generated at the metal member, thereby performing joining of the joining target object (500).

9. The joining method according to any one of claims 6 to 8, wherein
each joining target portion (505) is arranged to extend in a direction perpendicular to the stacking direction of the multiple members (501, 502), and
both electrodes (101, 102) and/or the joining target object (500) are continuously moved such that positions of the first electrode (101) and the second electrode (102) are, relative to a position of the joining target object (500), changed in a direction of extension of each joining target portion (505), thereby continuously performing joining of the joining target object (500).

10. The joining method according to any one of claims 6 to 9, wherein
each of the first electrode (101) and the second electrode (102) includes a substantially circular columnar gun body and an electrode portion arranged at a tip end of the gun body, and
the electrode portion pressure-contacts the surface of the joining target object (500) to distribute the power to between both electrodes (101, 102).

11. The joining method according to claim 9, wherein
the first electrode (101) and the second electrode (102) are roller electrodes, and
the roller electrodes are rotated with the roller electrodes pressure-contacting the surface of the joining target object (500), thereby continuously performing joining of the joining target object (500).
